# EUROPEAN PATENT APPLICATION

(11) **EP 2 236 927 A1**
(43) Date of publication of application: **06.10.2010**
(21) Application number: 10075136.1
(22) Date of filing: 26.03.2010
(51) Int. Cl.: F23N 5/24, F23D 14/42, F23N 1/02, B23K 7/10, F23K 5/00, F23D 14/46

(54) **Device for protecting the gas and oxygen supply to a cutting torch**

(30) Priority: 31.03.2009 NL 1036796
(71) Applicant: Van der Plaat, Bastiaan, 2957 HH Nieuw-Lekkerland (NL)
(72) Inventor: Van der Plaat, Bastiaan, 2957 HH Nieuw-Lekkerland (NL)
(74) Representative: Reynvaan, Lambertus Johannes

(57) **Abstract**

Device for protecting the oxygen and gas supply to a cutting torch (4) which is of the type operated by a negative pressure in the gas supply line (2', 2"). The device consists of a housing (8) which comprises an inner chamber which is divided into an upper (9') and a lower (9") chamber by a diaphragm (10). Said diaphragm controls a gas valve (13) which can allow gas to pass to the lower chamber from a supply (1), which lower chamber is connected to the cutting torch via the gas supply (2', 2"). Subsequently, the diaphragm actuates an oxygen valve (14) which can allow oxygen to pass to the cutting torch directly from the oxygen supply (1) via the oxygen supply (3', 3"). All this is arranged in such a manner that when there is no negative pressure in the gas supply line (2', 2"), the diaphragm closes the two valves (13, 14), so that the supply of gas and oxygen to the cutting torch stops.

## Description

The present invention relates to a device for protecting the gas and oxygen supply to a cutting torch, which torch is connected to a gas and oxygen connection via a gas supply line and an oxygen supply line, in which the torch is of the type which functions in accordance with the injection principle, where the oxygen flowing out creates a negative pressure in the gas supply line. Such cutting torches are generally used in workshops and shipyards.

A cutting torch of this type comprises a gas tap which is connected to a gas supply line and two oxygen taps which are connected to a supply line for oxygen. The one oxygen tap supplies oxygen for preheating and the second tap supplies cutting oxygen which is not mixed with the gas, but is supplied directly to the torch nozzle. The supply lines usually consist of rubber hoses which run from the gas and oxygen connection which is situated at a distance of a few tens of metres to the torch. These lines are therefore vulnerable and often suffer from damage, resulting in leaks of gas and/or oxygen with all the dangerous consequences this entails.

The presently known protective devices effectively limit themselves to the gas supply line. In European patent 0 783 931 in the name of the Applicant, a device is described for protecting both the gas supply line and the oxygen line. Although this device performed well, its construction was complicated and therefore expensive, as a result of which it did not gain wide acceptance.

It is therefore now an object of the present invention to provide a device for protecting the gas and oxygen supply to a cutting torch, which works according to the injection principle, which functions reliably, and can be manufactured in a simple and inexpensive manner.

This object is achieved according to the invention by a device which has the characterizing features indicated in Claim 1.

Claims 2-5 indicate further expedient embodiments of the invention.

The invention will now be explained in more detail with reference to the attached drawings, in which:
Fig. 1 diagrammatically shows the basic principle of the device according to the invention
Fig. 2 diagrammatically shows an embodiment of the protective housing from Fig. 1,
Fig. 3 shows a detail of the protective housing on a larger scale and in a state in which oxygen and gas are supplied to the torch, and
Fig. 4 diagrammatically shows a cutting torch according to the invention.

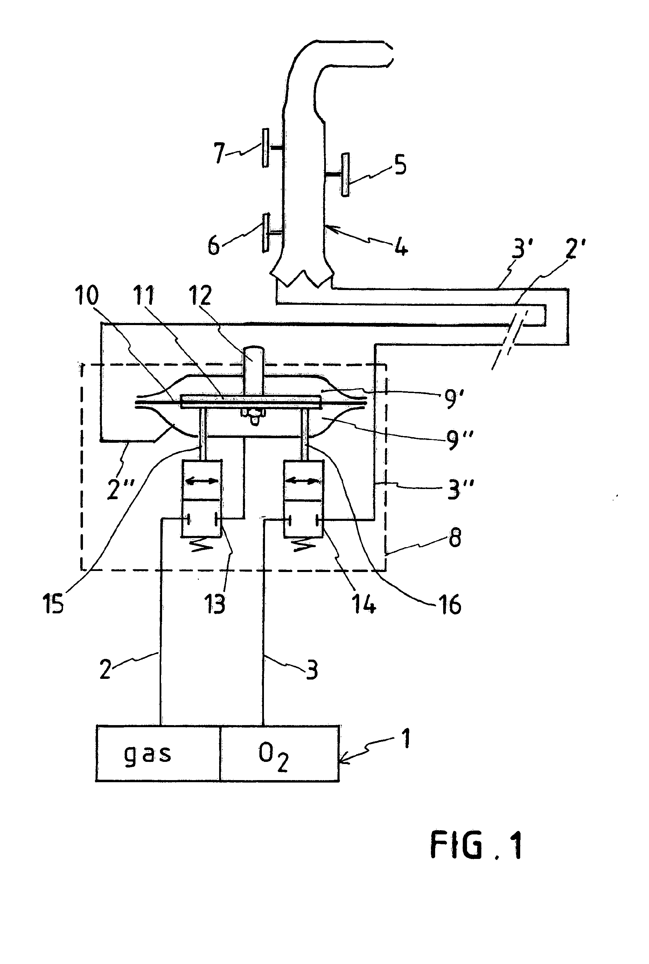

In Fig. 1, reference numeral 1 denotes a gas-oxygen connection from which a gas supply line 2 and an oxygen line 3 extend to a cutting torch 4 which has a gas tap 5 and two oxygen taps 6 and 7. In this case, reference numeral 6 denotes the tap for preheating oxygen and reference numeral 7 denotes the tap for cutting oxygen. The torch is of the type which functions according to the injection principle. This means that the oxygen which enters the torch at a pressure of approximately 4 bars causes a negative pressure or vacuum in the gas supply line when flowing out.

Close to the gas and oxygen connection 1, a device for protecting the gas and oxygen supply is arranged, which device is represented by the housing 8 formed by dashed lines. On one side of this housing 8 the lines 2 and 3 coming from the gas and oxygen connection 1 are connected while on the other side the lines 2' and 3' running to the torch are connected. Between the protective housing 8 and the torch, there are thus two lines having a length of at least approximately 20 metres, the so-called hose packet 2', 3'.

The protective housing comprises a chamber 9 in which a diaphragm 10 is arranged which divides the chamber 9 into an upper chamber 9' and a lower chamber 9". The central portion of the diaphragm is clamped between two metal plates 11 which, on the side of the upper chamber, are connected to a peg 12 which protrudes beyond the housing and forms a push-button for operating the diaphragm 10 by hand, as will be explained below.

The gas line 2 extending from the gas and oxygen connection 1 is connected to the lower chamber 9" via a valve 13 which is incorporated in the protective housing, and from this lower chamber a duct 2" extends to the connection for the gas supply line 2' to the torch. The oxygen supply line 3 coming from the gas and oxygen connection runs, via a valve 14 incorporated in the protective housing 8 and via a duct 3" to the connection for the oxygen supply line 3' to the torch 4. Both valves 13 and 14 are actuated by the diaphragm 10, by means of displaceable pins 15 and 16, which are connected on one side to the metal plates 11 of the diaphragm 10 and on the other side to the respective valves 13 and 14, in such a manner that the displacement of the diaphragm results in the opening or closure of these valves.

### The operation of the device is as follows:

Initially, in the starting position, both valves 13 and 14 are closed and the hose packet 2', 3' between the protective housing 8 and the torch 4 is unpressurized. In this state, it is therefore not possible to ignite the torch. In order to ignite the torch, the peg 12 first has to be pressed down for a short time, causing the diaphragm 10 to move down and the two valves 13 and 14 to be opened. As a result thereof, oxygen flows to the torch at a pressure of approximately 4 bars and gas flows to the torch via the lower chamber 9" and the duct 2' at a pressure of approximately 1 bar. When the peg is released, it moves upwards again, together with the diaphragm, as a result of the gas pressure and the spring action of the two valves, so that the two valves 13 and 14 close. In this position, the hose packet 2', 3' is thus under pressure, but the valves 13 and 14 are closed. The operator then goes to the torch 4 and first turns open the gas tap 5 and then the oxygen tap 6 and ignites the torch. The oxygen flowing out at great velocity sucks the gas along, so that a negative pressure is generated in the gas supply line 2'. This negative pressure spreads to the lower chamber 9", as a result of which the diaphragm 10 moves downwards and opens the two valves 13 and 14. This creates a stable operating state, in which both the gas and the oxygen can flow in an unrestricted manner from the gas and oxygen connection 1 to the torch 4 via the protective device. If the operator first closes the gas tap 5 and then the oxygen tap 6, the negative pressure in the lower chamber 9" is cancelled and the valves 13 and 14 will close. The hose packet will, however, remain pressurized, so that the operator can ignite the torch again without problem. If the pressure of the oxygen in the hose packet diminishes over time due to leakage or the like, the torch can no longer be ignited, as no negative pressure can be generated in the gas supply line and/or in the lower chamber. If there is a leak in the gas supply line, any negative pressure which has been created is cancelled and it is also no longer possible to generate negative pressure in this line. In both cases, the diaphragm moves upwards and closes the valves 13 and 14, which results in the torch being extinguished and makes it impossible to ignite the latter again. The operator now has to go to the protective housing in order to the push down the peg 12. As a result of the peg 12 being pushed down for a short time, oxygen and gas flow to the hose packet which will be pressurized again. If pressurization does not occur due to a leakage of the hoses, it will not be possible to ignite the torch, and the operator will realize that a leak has occurred.

Even if a leak occurs in the hose packet during use of the cutting torch, it will not be possible for a negative pressure to develop in the gas supply line and for the diaphragm 10 to move upwards and close the valves 13 and 14. As a result thereof, oxygen or gas can no longer escape.

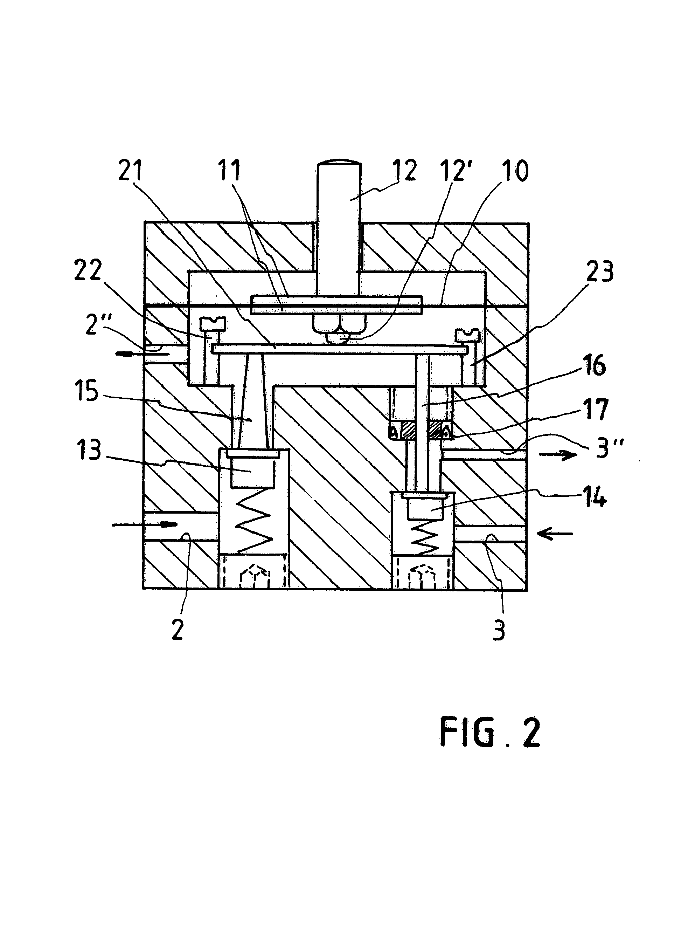

Fig. 2 diagrammatically shows the housing 8 on an enlarged scale and in more detail. As can be seen in this figure, the peg 12 is provided with a stud bolt 12' which extends through the two plates 11 and the diaphragm 10 and onto which a nut 20 is screwed, which presses the two plates 11 which enclose the diaphragm 10 together. The end of the stud bolt 12' which protrudes beyond the nut 20 rests on a lever 21 which is substantially parallel to the diaphragm, which in turn rests on the end of the two pins 15 and 16 which are formed in this case by the valve rods of the valves 13 and 14, respectively. At the longitudinal ends, the lever 21 is provided with an indentation which grips around the shaft of a bolt 22 and 23 which is screwed into the housing. The lever 21 can thus be moved in the vertical direction with the shafts of the bolts 22 and 23 serving as vertical guides.

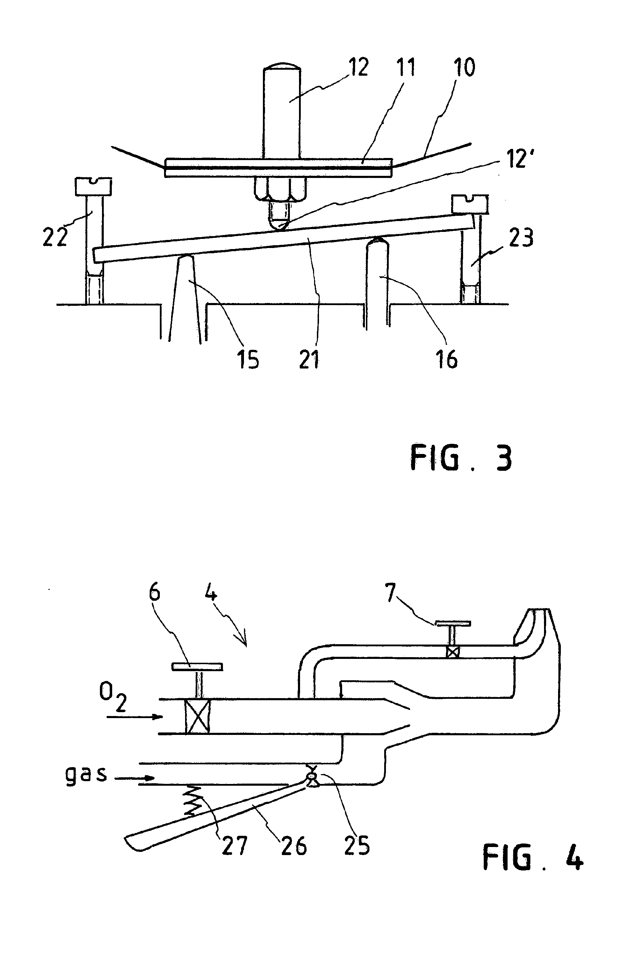

The stud bolt 12' rests on the centre of the lever 21, while the valve rods 15 and 16 each support the beam 21 near its ends. The valve rod 16 is provided with a seal 17 in order to prevent oxygen from entering the lower chamber 9". When it is moved, this valve rod experiences more friction than the valve rod 15 as a result thereof. In addition, the valve 14 is subjected to a relatively high oxygen pressure of approximately 4 bars. If a negative pressure develops in the lower chamber, the stud bolt 12' will press the beam 21 downwards, which will initially cause the beam to tilt with the head of the bolt 23 acting as a pivot point, due to the greater resistance of the valve 14. This state is illustrated on an enlarged scale in Fig. 3.

As can clearly be seen in this figure, as a result of the presence of the lever 21, a downward displacement of the diaphragm will result in a larger displacement of the valve rod 15, while the valve rod 16 will undergo a smaller displacement, and the lever effect causes an increase in the pressure exerted on the valve rod 16 by the diaphragm.

The result of this construction is that the valve rod 15 is pushed in over a greater distance than the valve rod 16. If the negative pressure in the lower chamber is increased further, the beam 21 will ultimately come to lie completely in the lower position, in which the two valve rods are completely pushed in and the two valves are opened to their maximum extent.

The advantage of this construction is, firstly, that a greater force can be exerted on the valve rod 16, so that oxygen is supplied to the torch even when there is only a small negative pressure in the lower chamber 9". In addition, the relatively large stroke of the valve rod 15 can be used to achieve an improved metering of the gas.

The fact is that it is important for the satisfactory operation of the device that the gas supply to the lower chamber 9" depends on the magnitude of the negative pressure in the chamber 9". In other words, more gas is supplied the further the valve rod 15 is pushed down. In order to achieve this, the valve rod 15 is designed to taper in the direction of the lower chamber. This is illustrated in an exaggerated manner in Fig. 2. In reality, this taper is hardly noticeable. in the operating state of the protective device illustrated in Fig. 3, an effective balance is ensured between the magnitude of the negative pressure in the chamber 9" and the degree to which the valve rod 15 is pushed down, i.e. the amount of gas supplied, by means of a suitable geometric embodiment of the lever 21 with the valve rods 15 and 16.

The invention also relates to a cutting torch which is suitable for use in combination with the above-described protective device. This cutting torch, which is shown diagrammatically in Fig. 4, is distinguished by a manually operated valve 25 which is provided in the gas supply line of the torch and is operated by a lever 26 which is fitted on the outer side of the torch. During use of the torch, this lever has to be pushed counter to the pressure of a spring 27 in order to open the valve. When the torch is accidentally dropped, for example because the operator becomes unwell, the valve will be closed and the gas supply will be interrupted as a result of the action of the spring 27. Thus, the negative pressure in the gas supply line is cancelled and the valves 13 and 14 of the protective device close. The torch is thus automatically extinguished and there is no longer any danger of any gas being released.

It will be clear that the invention is not limited to the embodiments illustrated and described here, but that a large number of variants will be obvious to those skilled in the art which are within the scope of the attached claims.

## Claims

1. Device for protecting the oxygen and gas supply to a cutting torch, which torch is connected to a gas and oxygen connection via a gas supply line and an oxygen supply line, which torch is of the type which functions in accordance with the injection principle, where the oxygen flowing out creates a negative pressure in the gas supply line,
**characterized**
**in that** the protective device consists of a housing (8) which comprises an inner chamber which is divided into an upper (9') and a lower (9") chamber by a diaphragm (10), the gas supply line (2) coming from the gas and oxygen connection (1) ends in the lower chamber (9") via a valve (13) which is actuated by the diaphragm (10), which lower chamber is connected, via a duct (2"), to the gas supply line (2') running to the torch (4), and
the oxygen supply line (3) coming from the gas and oxygen connection is connected to the oxygen supply line (3') running to the torch via a valve (14) which is actuated by the diaphragm (10);
the diaphragm is provided with a push-button (12) for manually opening the two valves (13, 14).

2. Device according to Claim 1, **characterized in that** the centre region of the diaphragm is clamped between two metal plates (11) which, on the side of the upper chamber (9'), are connected to a peg (12) which protrudes beyond the housing and forms the push-button, which metal plates contact the valve rods (15, 16) of the respective valves (13, 14) on the side of the lower chamber (9").

3. Device according to Claim 1, **characterized in that** the peg (12) has a stud bolt (12') which extends through the diaphragm and the plates and rests on a lever (21) which is arranged in the lower chamber so as to be substantially parallel to the diaphragm (10), which lever is guided on two ends by pins (22, 23) so as to be displaceable in the vertical direction, which lever rests on the two valve rods (15, 16) with the side which is turned away from the diaphragm.

4. Device according to Claim 3, **characterized in that** the stud bolt (12') rests on the centre of the lever and the lever rests on said valve rods near its two ends.

5. Device according to one or more of the preceding Claims 1-4, **characterized in that** the valve rod (15) of the valve (13) tapers towards the lower chamber (9"), so that the through-flow of gas increases as this valve rod is pushed in further.
